(19) Europäisches Patentamt

European Patent Office

Office européen des brevets

(11) **EP 1 123 900 A1**

(12) **EUROPEAN PATENT APPLICATION**

(43) Date of publication:
**16.08.2001 Bulletin 2001/33**

(51) Int Cl.⁷: **C01C 1/24**, C02F 1/72

(21) Application number: **00102879.4**

(22) Date of filing: **11.02.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **DSM N.V.**
**6411 TE Heerlen (NL)**

(72) Inventors:
• **Dsinter-De Hondt, Maria Louisa Christina**
**3600 Genk (BE)**

• **Postma, Leonardus Hubertus**
**6463 CX Kerkrade (NL)**
• **Lemmens, Joannes Albertus Wilhelmus**
**6041 HV Roermond (NL)**
• **Vonken, Hubertus Herman Barbara**
**6361 AD Nuth (NL)**

(74) Representative: **Kleiborn, Paul Erik**
**DSM Patents & Trademarks**
**Office Geleen**
**P.O. Box 9**
**6160 MA Geleen (NL)**

(54) **Process and apparatus for purifying an aqueous solution which contains ammonium sulfate, ammonium nitrate and organic compounds**

(57) The invention relates to a process and an apparatus for purifying an aqueous solution which contains ammonium sulfate, ammonium nitrate and organic compounds, which process involves oxidation of at least part of the organic compounds in the aqueous solution, wherein the oxidation is effected in the presence of hydrogen peroxide and ions of a transition metal. The process is in particular suitable for purifying a mother liquor obtained in a crystallization process in which crystallization of ammonium sulfate is effected, said mother liquor containing ammonium sulfate and ammonium nitrate.

EP 1 123 900 A1

Printed by Jouve, 75001 PARIS (FR)

**Description**

Process for purifying an aqueous solution which contains ammonium sulfate, ammonium nitrate and organic compounds, which process involves oxidation of at least part of the organic compounds in the aqueous solution.

Such a process is known from EP-A-459197. This publication describes that a mother liquor which contains ammonium sulfate, ammonium nitrate and organic compounds is treated with reducing agents at elevated temperature and pressure. As a result of this treatment the concentration of nitrate ions and organic compounds is decreased. For a further decrease of the concentration of organic compounds the solution may be subjected to oxidation with air, oxygen, or nitric acid, the oxidation being carried out at a tempurature of between 200 and 350 °C and at increased pressure. It is described that the reduction and oxidation may be carried out in any sequence. The purified solution obtained in the known process may be recycled to a crystallizer.

A disadvantage of the known process is that the oxidation is carried out at a high temperature which involves a risk of exposions due to the simultaneous presence of nitrate and organic compounds at high temperatures. Furthermore, under the conditions in such a process, the aqueous solution is very corrosive. This requires the use of specific corrosion-resistant materials, such as for instance titatium, which gives rise to high investment costs.

A goal of the invention is to provide a method for purifying an aqueous solution which contains ammonium sulfate, ammonium nitrate and organic compounds by oxidation of at least part of the organic compounds, in which process the risk of explosions is considerably reduced and in process the corrosion conditions are less severe.

This goal is achieved according to the invention in that the oxidation is effected in the presence of hydrogen peroxide and ions of a transition metal. According to the invention a high conversion of organic compounds can be achieved and the concentration of organic compounds as well as the Hazen number can be reduced to low values. It has further been found that the purified solution obtained can excellently be used as a fertilizer.

The amount of organic compounds present in an aqueous solution may be expressed as Total Organic Carbon (TOC). As used herein the TOC is the total weight of the carbon atoms of the organic compounds in the aqueous solution per weight of aqueous solution. As used herein, the conversion of the organic compounds is defined as

$$\text{Conversion} = (\text{TOC}(1) - \text{TOC}(2))/\text{TOC}(1)$$

wherein:

TOC(1) =   TOC before oxidation
TOC(2) =   TOC after oxidation

Another relevant parameter is the Hazen number. The Hazen number is a measure for the amount of color forming organic compounds in the aqueous solution. As used herein, the Hazen number is expressed in °H as measured at a wave length of 390 nm.

The oxidation is effected in the presence of hydrogen peroxide. The function of the hydrogen peroxide is to act as an oxidizing agent. The hydrogen peroxide is usually added to the aqueous solution. The preferred amounts of hydrogen peroxide may depend on factors such as for instance the desired conversion of organic compounds, the temperature, and process economics. Increasing the molar quantity of hydrogen peroxide added to the aqueous solution for a given molar quantity of carbon atoms of organic compounds in the aqueous solution has the advantage that the conversion is increased. Preferably, the molar ratio of hydrogen peroxide added to the aqueous solution relative to the carbon atoms of the organic compounds present in the aqueous solution before the oxidation is at least 0.5, more preferably at least 1, in particular at least 2. For instance, in the case of a continuous process in which hydrogen peroxide and the aqueous solution are continously supplied to an oxidation zone, the molar quantity of hydrogen peroxide supplied per unit of time, is preferably at least 0.5 times, more preferably at least 1, in particular at least 2 times the molar quantity of carbon atoms of the organic compounds supplied to the oxidation zone per unit of time. In view of process economics, the molar ratio of hydrogen peroxide added to the aqueous solution relative to the carbon atoms of the organic compounds present in the aqueous solution before the oxidation is preferably less than 100, more preferably less than 50. If the temperature at which the oxidation is carried out increases, the preferred amounts of added hydrogen peroxide generally increase.

The oxidation is effected in the presence of ions of a transition metal. The function of the ions of the transition metal is to catalyze the oxidation of organic compounds. Examples of suitable transition metals are copper, manganese and iron. Preferably, the transition metal is iron, since the catalytic activity of iron is high. It is also possible to use combinations of various transition metals. The oxidation may be effected in the presence of undissolved compounds which contain one or more ions of the transition metal. Undissolved compounds may for instance include salts, oxides and/or hydroxides. Preferably, the oxidation is effected in the presence of dissolved ions of the transition metal, since the catalytic activity of dissolved ions of the transition metal is higher than that of undissolved ions. The ions of the transition metal may be introduced in the aqueous solution by any method. Ions of iron may for instance be introduced in the aqueous solution by adding Iron(III)compounds, such as for instance $Fe(OH)_3$, $Fe_2O_3$, $FeCl_3$ and/or $Fe_2(SO_4)_3$. Preferably, ions of iron are introduced in the aqueous solution by adding Iron(II)compounds, such as for instance FeO, $Fe(OH)_2$, $FeCl_2$, $FeCO_3$, $Fe(NO_3)_2$ and most preferably $FeSO_4$. Preferably, these salts are at least partly dissolved before they are added to the aqueous solution. It is also possible to introduce ions of iron in the aqueous solution by causing metallic iron to dissolve.

The preferred amounts of ions of the transition metal added depend on various factors, such as for instance the amount of hydrogen peroxide added, the temperature, the pH and other process conditions. Preferably, the hydrogen peroxide and the ions of the transition metal are added to the aqueous solution, the molar ratio of the added hydrogen peroxide and the ions of the transition metal added being preferably, above 10 : 1, more preferably above 20 : 1, in particular above 50 : 1. Preferably, the molar ratio of the added hydrogen peroxide and the ions of the transition metal added is below 2000 : 1, more preferably below 1000 : 1, most preferably below 500 : 1. The temperature at which the oxidation is carried out is not essential for the invention, and usually lies between 5 °C and the boiling point of the aqueous solution. Increasing the temperature at which the oxidation is carried out has the advantage that a higher conversion and reaction rate are achieved under further equal circumstances and that a relatively small amount of ions of the transition metal can be used to obtain a given conversion and reaction rate under further equal circumstances. Keeping the amount of ions of the transition metal relatively low is advantageous, if it is desired to purify the aqueous solution further subsequent to the oxidation by removing the ions of the transition metal from the aqueous solution. Carrying out the oxidation at elevated temperature is in particular advantageous if the aqueous solution includes a mother liquor which is obtained from a crystallization process in which crystallization of ammonium sulfate crystals is effected, the mother liquor having an elevated temperature. This is advantageous since less energy is needed to bring the aqueous solution at the elevated temperature. Preferably, the oxidation is carried out at a temperature of at least 50 °C, more preferably of at least 60 °C, in particular at least 70 °C, more in particular at least 80 °C. Preferably, the temperature at which the oxidation is carried out lies below the boiling point of the aqueous solution. The boiling point of the aqueous solution may be raised by raising the pressure. Preferably, the oxidation is effected at atmospheric pressure. Preferably, the temperature at which the oxidation is carried out is below 180 °C, more preferably below 150 °C and most preferably below 120 °C. Reducing the temperature reduces the risk of explosions and results in corrosion conditions which are less severe.

The pH at which the oxidation is carried out is not limited to a specific value. Preferably, the pH at which the oxidation is effected is below 9, more preferably below 7. This gives the advantage that the extent to which ammonium vapors may be released from the the aqueous solution is lessened. Preferably, the pH at which the oxidation is carried out has such a value that a substantial part of the ions of the transition metal are dissolved in the aqueous solution. If the transition metal is iron, the pH at which the oxidation is carried out is preferably below 6. This has the advantage that a substantial part of the ions are dissolved in the aqueous solution. Preferably, the pH at which the oxidation is carried out is below 5, more preferably below 4. This results in an increased catalytic activity of the ions of iron. Preferably, the pH at which the oxidation is carried out is above 1, more preferably above 1.5. This results in an increased catalytic activity of the ions of iron. Surprisingly it has been found that the values for the pH at which the advantages mentioned above are achieved, correspond to or are close to the values for the pH which are often found for mother liquors obtained from a crystallization process in which crystallization of ammonium sulfate crystals is effected. If such a mother liquor is purified according to the invention, no or only small changes of the pH are to be made in order to effect the oxidation at a pH in the preferred ranges.

As a result of the oxidation the concentration of organic compounds, as well as the Hazen number, is considerably reduced. Subsequent to the oxidation, the aqueous solution may be subjected to further purification steps. Preferably, subsequent to the oxidation at least part of the ions of the transition metal are removed from the aqueous solution. This results in a further decrease of the concentration organic compounds in the aqueous solution and in a further decrease of the Hazen number. The removal of ions of the transition metal may be carried out by any known method, for instance by electrochemical methods. Preferably, the removal of the ions of the transition metal involves forming precipitated compounds of the transition metal ions in the aqueous solution and separating the precipitated compounds from the aqueous solution. The formation of precipitated compounds may for instance be effected by adding a base to the aqueous solution, such as for instance KOH, NaOH, CaO, $Ca(OH)_2$, $Ca(CO_3)_2$. Preferably, the formation of precipitated compounds is effected while adding $NH_4OH$ to the aqueous solution.

Preferably, the formation of precipitated compounds is effected at a pH of below 9, more preferably below 8. This gives the advantage that the extent to which ammonium vapors may be released from the aqueous solution is lessened. If the transition metal is iron, the formation of precipitated compounds is preferably effected at a pH of at least 6.0, more preferably at least 6.5 and most preferably at least 7. This increases the rate at which precipitated compounds are formed. The temperature at which the formation of precipitated compounds is usually between 5 °C and the boiling point of the aqueous solution. Preferably, the formation of precipitated compounds is effected at a temperature of at least 30 °C, preferably at least 40 °C, in particular at least 50 °C. This is advantageous since the rate at which the formation of precipitated compounds is effected increases with increasing temperature.

The precipitated compounds may be separated from the aqueous solution by any known method for instance by sedimentation, centrifuging and/or filtering.

The process according to the invention is in particular advantageous if the concentration of ammonium nitrate in the aqueous solution is high. Purifying the aqueous solution using other techniques, such as for instance wet oxidation at high temperatures, becomes more difficult due to the increased risk of explosions, if the concentration of ammonium nitrate increases. Preferably, the ammonium nitrate concentration in the aqueous solution is at least 2 wt.%, more preferably at least 5 wt.%, in particular at least 10 wt.%, more in particular at least 15 wt.%. All percentages have been given with respect to the total weight of the aqueous solution.

The process according to the invention is in particular advantageous if the concentration of ammonium sulfate in the aqueous solution is high. Purifying the aqueous solution using other techniques, such as for instance wet oxidation at high temperatures becomes more difficult due to the increased severity of the corrosion conditions if the concentration of ammonium sulfate increases. Preferably, the concentration ammonium sulfate concentration in the aqueous solution is at least 5 wt.%, more preferably at least 10 wt.% and in particular at least 15 wt.% and more in particular at least 20 wt.%. All percentages have been given with respect to the total weight of the aqueous solution.

The concentration organic compounds in the aqueous solution before purification is not essential for the invention. Preferably, the TOC of the aqueous solution before purification is below 5000 mg/kg, more preferably below 2000 mg/kg, most preferably below 1500 mg/kg.

The process according to the invention is in particular advantageous if the aqueous solution includes mother liquor obtained in a crystallization process in which crystallization of ammonium sulfate is effected, said mother liquor containing ammonium sulfate and ammonium nitrate. Such a mother liquor may for instance be obtained in an oximation process, which may for instance be applied in a production process for caprolactam. An oximation process may include an oximation reaction in which an alkanone, in particular cyclohexanone, is reacted with hydroxylamine sulfate in the presence of an ammonium-containing compound, such as for instance ammonia, to form cyclohexanone oxim and an aqueous effluent, said aqueous effluent containing ammonium sulfate, ammonium nitrate and organic compounds. Said organic compounds may have been formed as a result of the oximation reaction or in prior reaction steps. The aqueous effluent may optionally be combined with other ammonium sulfate-containing effluents. The aqueous effluent may be subjected to a crystallization process in which crystallization of ammonium sulfate crystals is effected and in which a mother liquor is obtained having an increased concentration of ammonium nitrate and of the organic compounds relative to that of the aqueous effluent. If the concentration of ammonium nitrate and organic compounds becomes too high, the quality of the ammonium sulfate crystals may be impaired. Therefore, in order to prevent the concentration of ammonium nitrate and organic compounds of becoming too high, mother liquor is preferably withdrawn from the crystallization process, either continuously or discontinuously. Typically, the mother liquor withdrawn contains 5-70 wt. % ammonium nitrate and between 10-40 wt.% ammonium sulfate. More in particular the mother liquor withdrawn contains 10-40 wt.% ammonium nitrate and 20-35 ammonium sulfate. Typically, the TOC of the mother liquor is below 5000 mg per kg mother liquor, in particular below 2000 mg per kg mother liquor and more in particular below 1500 mg per kg mother liquor. Typically, the TOC of the mother liquor is at least 100 mg per kg mother liquor, in particular at least 200 mg per kg mother liquor, and more in particular 300 mg per kg mother liquor.

We have found that such a mother liquor can excellently be purified using the process according to the invention, and that the purified mother liquor can excellently be used as a fertilizer.

The invention also relates to an apparatus for purifying an ammonium sulfate and ammonium nitrate-containing effluent, said apparatus comprising a crystallizer for preparing ammonium sulfate crystals and a mother liquor, a first reactor for effecting oxidation of organic compounds in the mother liquor, a second reactor for effecting the formation of precipitated compounds in the mother liquor, and a solid/liquid separator for separating precipitated compounds from the mother liquor.

The crystallizer is not limited to a specific type of crystallizer. Examples of suitable crystallizers have been described in "Perry's Chemical Engineers' Handbook", Robert.H. Perry, Don W. Green, and James O. Maloney eds., 7th edition, 1997, McGraw-Hill, chapter 18, page 44-55.

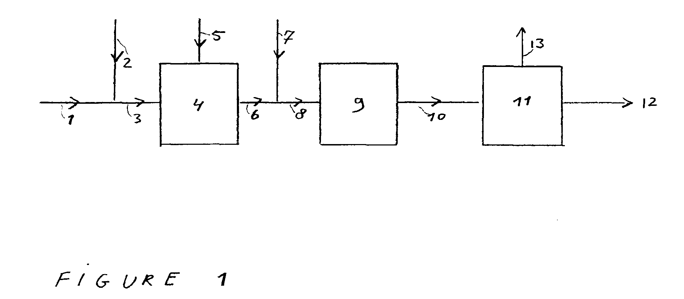

A preferred embodiment of the invention will now be described with reference to figure 1, which shows a flow-chart of a preferred embodiment of the process according to the invention. An aqueous, ammonium nitrate and ammonium sulfate -containing solution to be purified and a Fe(II)SO$_4$ -containing solution are continuously supplied via lines **1** and **2** respectively, combined and subsequently supplied via line **3** to stirred tank **4**. Hydrogen peroxide is continuously supplied to the stirred tank **4** via line **5**. In the stirred tank oxidation of organic compounds present in the aqueous solution takes place, the oxidized organic compounds leaving the aqueous solution as a gas. It is also possible to use more stirred tanks in series instead of one single stirred tank. An aqueous solution having a decreased concentration of organic compounds is continuously withdrawn from the stirred tank via line **6**, combined with a NH$_4$OH-containing solution which is continuously supplied via line **7**, the combined solutions being supplied via line **8** to stirred tank **9**. In stirred tank **9**, precipitation of an iron compound is effected. An aqueous solution containing the precipitated compounds is continuously withdrawn from stirred tank **9** and continuously supplied via line **10** to filtering apparatus **11**. The filtering apparatus may include a cricket filter. In filtering apparatus **11** the precipitated compounds are separated from the aqueous solution, a filtered solution and precipitated compounds being withdrawn via lines **12** and **13** respectively.

The preferred embodiment described above is in particular suitable if the aqueous solution to be purified is a mother liquor withdrawn from a crystallizer. Said mother liquor may for instance contain 10 to 40 wt.% ammonium nitrate and 20 to 35 wt.% ammonium sulfate dissolved in water (wt.% given relative to the mother liquor), the TOC of the mother liquor for instance being about 800 mg/l, the Hazen number about 800 °H, the pH between 2 and 3. Upon withdrawing the mother liquor from the crystallization apparatus (not shown), the mother liquor may directly be supplied via line **1**, however the mother liquor is preferably diluted to some extent in order to prevent crystallization. The temperature of the mother liquor withdrawn from the crystallizer may for instance be between 50 and 90 °C. Typically, 1 to 2 parts per weight of hydrogen peroxide are supplied per 100 parts of mother liquor. Typically, 0.0025 to 0.01 moles of Fe(II)SO4 are supplied per mole of hydrogen peroxide supplied. Stirred tank **5** is preferably operated at a temperature of about 90 °C. The residence time of the aqueous solution in the stirred tank is preferably between 45 and 90 minutes. The $NH_4OH$-containing solution is preferably supplied in such amounts that the pH of the solution in stirred tank **9** is about 7. The temperature in stirred tank is preferably about 60 °C. The residence time of the solution in stirred tank **9** is preferably about 4 hours.

The invention will now be elucidated with reference to the following examples without being limited thereto.

Example I

A mother liquor (32 wt.% ammonium nitrate, 20 wt.% ammonium sulfate with respect to the total weight of the mother liquor, TOC = 530 mg/kg) obtained in a crystallization process in which ammonium sulfate crystals were obtained from a neutralized effluent obtained in an oximation process in which cyclohexanone was reacted with hydroxylamine sulfate, was purified according to the invention. Said mother liquor was passed into a continuously stirred tank reactor (stirring rate 600 rpm). The reactor was kept at a temperature of 70 °C, $Fe(II)SO_4.7H_2O$ was dissolved in an acidic solution of pH = 1-2, and fed to the reactor in such amount that the iron concentration in the mother liquor was 40 mg/l. The pH of the mother liquor in the reactor was 2. Instantaneously hydrogen peroxide was added to the reactor, the amount being 1 wt.% relative to the weight of the mother liquor in the reactor. Two hours after the addition of hydrogen peroxide, the TOC of the mother liquor was determined, and was found to be 310 mg/kg. This corresponds to a conversion of 42%.

Example II

Example I was repeated. The difference was that the pH in the reactor during the oxidation was 7. The TOC of the mother liquor following the oxidation was 430 mg/kg. This corresponds to a conversion of 19%.

Example III

A mother liquor obtained in a crystallization process in which ammonium sulfate crystals were obtained from a neutralized effluent obtained in an oximation process in which cyclohexanone was reacted with hydroxylamine sulfate, was purified according to the invention. Said mother liquor (32 wt.% ammonium nitrate, 20 wt.% ammonium sulfate with respect to the total weight of the mother liquor, TOC = 611 mg/kg) was mixed with an acidic solution which contained dissolved iron(II)sulfate, and passed into a supply tank. The mother liquor in the supply tank contained 79.6 mg dissolved Fe per kg of mother liquor. Before the start of the process, a glass stirred tank reactor (content 1 liter) was filled with mother liquor from the supply tank. The process was started, and mother liquor was continuously passed from the supply tank to the reactor, and purified mother liquor was continuously withdrawn from the reactor, the flow rates being such that the residence time of the mother liquor in the reactor was 45 minutes. A $H_2O_2$ solution (30 wt.% $H_2O_2$) was continuously fed to the reactor at a flow rate such that 1 part by weight of $H_2O_2$ per unit of time was fed to the reactor per 100 parts by weight of mother liquor per unit of time. The reactor was kept a temperature of 60°C. The stirring rate was 600 rpm. The pH of the mother liquor in the reactor was 2.27. After a period of 4 times the residence time of the mother liquor in the reactor, the process was stopped, and the content of the reactor was neutralized by adding $NH_4OH$ so that a pH of 7 was obtained. The neutralized mother liquor was kept at a temperature of 50°C for a period of about 12 hours. As a result a precipitate was formed which was removed by filtration. The TOC of the resulting mother liquor ($TOC_{out}$) was determined as well as the Hazen number (°H). The Hazen number was determined by measuring the extinction at a wave length of 390 nm, and by multiplying the value for the extinction with 750. The TOC of the purified mother liquor after filtration ($TOC_{out}$), the TOC conversion (= $(TOC_{in}-TOC_{out})/TOC_{in}$)), the Hazen number

after filtration, and the conversion of the Hazen number have been indicated in table 1.

Examples IV-XVIII

Example III was repeated under various conditions. In all experiments the mother liquor contained 32 wt.% ammonium nitrate and 20 wt.% ammonium sulfate relative to the total weight of the mother liquor. The conditions as well as the results have been indicated in table 1. Table 1 shows the temperature (T), the residence time ($\tau$) of the mother liquor in the reactor, the pH in the reactor, the weight of hydrogen peroxide (in wt.%) fed to the reactor per unit of time relative to the weight of the mother liquor fed to the reactor per unit of time, the concentration of iron in the mother liquor (conc. Fe) the molar ratio ($H_2O_2/Fe$) of hydrogen peroxide fed to the reactor per unit of time relative to the iron fed to the reactor per unit of time, the TOC of the mother liquor to be purified ($TOC_{in}$), the TOC of the purified mother liquor after filtration ($TOC_{out}$), the TOC conversion (= ($TOC_{in}$-$TOC_{out}$)/$TOC_{in}$)), the Hazen number after filtration, and the conversion of the Hazen number.

Example XX

Example XIX was repeated. However, instead of 123.2 mg/kg of iron, the following mixture of ions was used: 49.0 mg/kg iron, 38.5 mg/kg of manganese, and 44.5 mg/kg of copper. This corresponds to a molar ratio ($H_2O_2/metal$ ion) of hydrogen peroxide fed to the reactor per unit of time relative to the ions of the transition metal fed to the reactor per unit of time of 200. The TOC of the purified mother liquor after filtration was 10 mg/kg. This corresponds to a TOC conversion of 98%.

Table 1

| Ex. | T (°C) | $\tau$ (hour) | pH | $H_2O_2$ (wt.%) | Fe (mg/kg) | $H_2O_2$/Fe (mol/mol) | $TOC_{in}$ (mg/kg) | $TOC_{out}$ (mg/kg) | Conv. TOC (%) | Hazen No. (°H) | Conv. Hazen no.(%) |
|-----|--------|---------------|-----|-----------------|------------|-----------------------|--------------------|---------------------|---------------|----------------|--------------------|
| III | 60 | 0.78 | 2.27 | 1 | 79.6 | 200 | 611 | 352 | 42.4 | 202 | 78.4 |
| IV | 60 | 0.77 | 2.33 | 0.5 | 20.3 | 390 | 559 | 446 | 20.2 | 516 | 46.7 |
| V | 60 | 1.6 | 2.33 | 1 | 39.8 | 415 | 611 | 388 | 36.5 | 304 | 67.4 |
| VI | 60 | 1.53 | 2.89 | 0.5 | 20.3 | 387 | 559 | 398 | 28.8 | 389 | 59.9 |
| VII | 60 | 0.77 | 2.85 | 0.5 | 40.4 | 208 | 573 | 357 | 37.7 | 361 | 64.4 |
| VIII | 70 | 1.17 | 2.74 | 0.8 | 42.4 | 306 | 579 | 308 | 46.8 | 188 | 76.2 |
| IX | 80 | 0.75 | 2.53 | 1 | 41.1 | 390 | 579 | 329 | 43.2 | 186 | 76.5 |
| X | 80 | 0.78 | 2.97 | 1 | 80.3 | 196 | 580 | 207 | 64.3 | 65 | 92 |
| XI | 80 | 0.8 | 2.53 | 0.5 | 40.5 | 202 | 564 | 289 | 48.8 | 229 | 76.9 |
| XII | 80 | 0.79 | 3.03 | 0.5 | 20.3 | 401 | 579 | 369 | 36.3 | 308 | 61 |
| XIII | 80 | 1.6 | 2.56 | 1 | 79.6 | 203 | 564 | 172 | 69.5 | 57 | 94.3 |
| XIV | 90 | 1.6 | 2.64 | 1 | 79.6 | 217 | 458 | 114 | 75.1 | 37 | 95.7 |
| XV | 90 | 1.06 | 2.48 | 1.5 | 117.5 | 200 | 630 | 140 | 77.8 | 20 | 97.9 |
| XVI | 90 | 1.08 | 2.47 | 1 | 199.1 | 80 | 601 | 149 | 75.2 | 13 | 98.8 |
| XVII | 90 | 1.05 | 2.59 | 2 | 77.2 | 400 | 601 | 166 | 72.4 | 39 | 96.5 |
| XVIII | 90 | 1.05 | 2.22 | 2 | 308.7 | 100 | 780 | 131 | 83.2 | 60 | 95.9 |
| XIX | 90 | 1 | 2 | 1.5 | 123.2 | 200 | 510 | 45 | 91 | | |

**Claims**

1. Process for purifying an aqueous solution which contains ammonium sulfate, ammonium nitrate and organic compounds, which process involves oxidation of at least part of the organic compounds in the aqueous solution, characterized in that the oxidation is effected in the presence of hydrogen peroxide and ions of a transition metal.

2. Process according to claim 1, characterized in that the aqueous solution includes mother liquor obtained in a crystallization process in which crystallization of ammonium sulfate is effected, said mother liquor containing ammonium sulfate and ammonium nitrate.

3. Process according to claim 1 or claim 2, characterized in that at least part of the organic compounds have been produced in an oximation process.

4. Process according to any one of claims 1-3, characterized in that the oxidation is effected in the presence of dissolved ions of the transition metal.

5. Process according to any one of claims 1-4, characterized in that the transition metal is iron.

6. Process according to any one of claims 1-5, characterized in that the oxidation is carried out at a temperature of at least 60 °C.

7. Process according to any one of claims 1-6, characterized in that the oxidation is effected at a pH of below 9.

8. Process according to any one of claims 1-7, characterized in that the oxidation is effected at a pH of below 5.

9. Process according to any one of claims 1-8, characterized in that subsequent to the oxidation at least part of the ions of the transition metal are removed from the aqueous solution.

10. Process according to any claim 9, characterized in that the removal of the ions of the transition metal involves forming precipitated compounds of the ions of the transition metal in the aqueous solution and separating the precipitated compounds from the aqueous solution.

11. Process according to claim 10, characterized in that the formation of precipitated compounds is effected at a pH of at least 6.5.

12. Process according to claim 10 or claim 11, characterized in that the formation of precipitated compounds is effected while adding $NH_4OH$ to the aqueous solution.

13. Process according to any one of claims 10-12, characterized in that the formation of the precipitated compounds is effected at a temperature of at least 30 °C.

14. Apparatus for purifying an ammonium sulfate and ammonium nitrate-containing effluent, said apparatus comprising a crystallizer for preparing ammonium sulfate crystals and a mother liquor, a first reactor for effecting oxidation of organic compounds in the mother liquor, a second reactor for effecting the formation of precipitated compounds in the mother liquor, and a solid/liquid separator for separating precipitated compounds from the mother liquor.

FIGURE 1

**European Patent Office**

**EUROPEAN SEARCH REPORT**

Application Number

EP 00 10 2879

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | EP 0 459 197 A (BAYER AG) 4 December 1991 (1991-12-04) * the whole document * | 1-14 | C01C1/24 C02F1/72 |
| A | FR 2 090 006 A (ERDOELCHEMIE GMBH) 7 January 1972 (1972-01-07) * page 5, line 6 - line 8; claim 1 * | 1,14 | |
| A | DATABASE WPI Section Ch, Week 197705 Derwent Publications Ltd., London, GB; Class C04, AN 1977-08328Y XP002140502 & JP 51 146396 A (MITSUBISHI CHEM IND LTD) , 14 December 1976 (1976-12-14) * abstract * | 1-3 | |
| A | US 5 536 385 A (MALACHOSKY EDWARD ET AL) 16 July 1996 (1996-07-16) * the whole document * | 1 | |
| A | DATABASE WPI Section Ch, Week 197940 Derwent Publications Ltd., London, GB; Class D15, AN 1979-72688B XP002140503 & JP 54 108459 A (KANKYO ENG KK), 25 August 1979 (1979-08-25) * abstract * | 1,4,5,8 | TECHNICAL FIELDS SEARCHED (Int.Cl.7) C01C C02F |
| A | DATABASE WPI Section Ch, Week 197747 Derwent Publications Ltd., London, GB; Class D15, AN 1977-83533Y XP002140504 & JP 52 120557 A (EBARA INFILCO KK), 11 October 1977 (1977-10-11) * abstract * | 1,4,5,8 | |

The present search report has been drawn up for all claims

| Place of search | Date of completion of the search | Examiner |
|---|---|---|
| THE HAGUE | 19 June 2000 | Zalm, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 123 900 A1**

**ANNEX TO THE EUROPEAN SEARCH REPORT
ON EUROPEAN PATENT APPLICATION NO.**

EP 00 10 2879

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2000

| Patent document cited in search report | | Publication date | Patent family member(s) | | Publication date |
|---|---|---|---|---|---|
| EP 0459197 | A | 04-12-1991 | DE 4016715 A | | 28-11-1991 |
| | | | DE 59103468 D | | 15-12-1994 |
| | | | JP 4228419 A | | 18-08-1992 |
| FR 2090006 | A | 07-01-1972 | AT 303760 B | | 15-11-1972 |
| | | | BE 766069 A | | 21-10-1971 |
| | | | DE 2019059 A | | 11-11-1971 |
| | | | JP 54003840 B | | 27-02-1979 |
| | | | NL 7104981 A | | 25-10-1971 |
| JP 51146396 | A | 15-12-1976 | JP 1131070 C | | 17-01-1983 |
| | | | JP 57010041 B | | 24-02-1982 |
| US 5536385 | A | 16-07-1996 | NONE | | |
| JP 54108459 | A | 25-08-1979 | NONE | | |
| JP 52120557 | A | 11-10-1977 | NONE | | |

EPO FORM P0459

For more details about this annex : see Official Journal of the European Patent Office, No. 12/82